Europäisches Patentamt

European Patent Office

Office européen des brevets

(11) Publication number: **0 512 620 A2**

## EUROPEAN PATENT APPLICATION

(21) Application number: **92201211.7**

(22) Date of filing: **04.05.92**

(51) Int. Cl.⁵: **G01N 23/207**

(30) Priority: **07.05.91 EP 91201090**

(43) Date of publication of application:
**11.11.92 Bulletin 92/46**

(84) Designated Contracting States:
**DE FR GB NL**

(71) Applicant: **N.V. Philips' Gloeilampenfabrieken**
**Groenewoudseweg 1**
**NL-5621 BA Eindhoven(NL)**

(72) Inventor: **Timmers, Jacob**
**c/o INT. OCTROOIBUREAU B.V., Prof.**
**Holstlaan 6**
**NL-5656 AA Eindhoven(NL)**
Inventor: **Delhez, Robbert**
**c/o INT. OCTROOIBUREAU B.V., Prof.**
**Holstlaan 6**
**NL-5656 AA Eindhoven(NL)**
Inventor: **Tuinstra, Fokke**
**c/o INT. OCTROOIBUREAU B.V., Prof.**
**Holstlaan 6**
**NL-5656 AA Eindhoven(NL)**

(74) Representative: **Scheele, Edial François et al**
**INTERNATIONAAL OCTROOIBUREAU B.V.**
**Prof. Holstlaan 6**
**NL-5656 AA Eindhoven(NL)**

(54) **X-ray analysis apparatus.**

(57) An X-ray analysis apparatus comprises a central control device which includes means for recording simulated beam paths in the apparatus, thus enabling correction for the effects of radiation-optical deviations as well as of other deviations in the apparatus or a specimen on detection signals. Such a correction facility allows for construction of an apparatus having a large number of freedoms and hence a universal application.

EP 0 512 620 A2

The invention relates to a radiation analysis apparatus, comprising a radiation source and a radiation detector for detecting radiation emanating from a specimen to be examined.

Such a radiation analysis apparatus in the form of a X-ray analysis apparatus is known from US 2,853,618. In such apparatus the accuracy to be achieved is adversely affected notably by deviations in the radiation optical system of the apparatus, for example due to geometrical optical inaccuracies, variations in respect of positioning and orientation of components and the specimen, variations in respect of absorption and diffraction properties of a specimen to be examined, and the like. Consequently, the resolution and the measuring accuracy are often too low to satisfy the contemporary severe analysis requirements. Moreover, the freedom of positioning and orientation of radiation-optical components of such apparatus relative to one another is usually severely restricted by the movement mechanism used.

An apparatus described in US 4,726,047 aims to achieve a higher degree of accuracy of relative orientation and a higher degree of freedom in respect of positioning of optical elements by way of an adapted movement mechanism. Due to disturbing deviations in the radiation-optical system of the apparatus, however, in many cases such a movement mechanism of comparatively complex mechanical construction also fails to achieve the described object.

It is *inter alia* an object of the invention to mitigate the described restrictions. To achieve this, a radiation analysis apparatus of the kind set forth in accordance with the invention is characterized in that the apparatus comprises a device for generating and processing radiation-optical information in order to generate correction signals to correct for deviations in the apparatus.

In a preferred embodiment, correction signals are available on-line for the processing of measuring signals to be recorded by the apparatus. Correction signals can be obtained notably by generating simulation of measurements. Using simulated, positioned and radiation-optical elements ideally specified in position, orientation and dimension signals are calculated and stored in a memory of a central control unit. During the subsequent real measurements this information can be used to correct radiation-optical deviations and to correct deviations, if any, in respect of relative position and orientation of components of the apparatus. A simulation measurement notably consists of a measurement to be executed by means of a radiation path simulation computer program involving such a large number of simulated radiation paths that a suitable prediction can be made as regards, for example peak position or peak width or peak shape in radiation patterns to be measured. To achieve this, an apparatus in accordance with the invention is notably suitable for the measurement of radiation intensity patterns, such as for spectral analysis and diffraction measurements, where the line patterns to be measured can be individually corrected in respect of position and/or shape by means of correction signals obtained by way of the simulation measurements. Such an apparatus can also be aligned and collibrated very accurate with the aid of the correction signals obtained.

A beam path simultation computer program in accordance with the invention is also suitable for use for the study and/or evaluation of apparatus performance and for interpretation of measurements in order to obtain desired measuring results.

In a preferred embodiment, an apparatus in accordance with the invention comprises a radiation source for generating radiation in the visible or near-visible spectral trajectory in order to generate absorption spectra by irradiation of a specimen.

A further embodiment of the apparatus comprises a radiation source for generating a X-ray beam in order to produce diffraction patterns by diffraction of the X-ray beam on a specimen. For the generating of diffraction patterns, instead of an X-ray source for X-ray diffraction use can also be made of a radiation source in order to generate a particle beam such as an electron beam for the measurement of electron diffraction patterns. On the other hand, the radiation-optical system in an apparatus comprising an X-ray source may be adapted to generate X-ray spectra of a specimen to be examined. In order to achieve a high degree of freedom in respect of the radiation-optical system of, for example a X-ray analysis apparatus, a X-ray source and an X-ray detector may be separately accommodated in respective, independently controllable translation mechanisms with adapted alignment mechanisms for the radiation-optical components. These components can thus be positioned and oriented with respect to a specimen to be analysed in a mutually independent, controllable manner. Such an apparatus exhibits a high degree of freedom as regards the X-ray optical system, so that, for example a Bragg-Brentano as well as a Seemann-Bohlin optical system and, possibly via an analysis crystal exchange, a focusing and a non-focusing optical system can be used.

In a preferred embodiment, the position, orientation or angular setting can be adjusted and recorded by means of sensors. As a result, any desired optical setting can be realised in a centrally controlled fashion, it also being possible to record said setting also centrally for optimum signal processing. The X-ray source and the detector are notably mounted in an x-y movement system in which, for example the x-axis can be assumed to extend parallel to a specimen surface whilst the y-axis exteds transversely of the relevant specimen surface. Moreover, for example the angular orientation of the source and the detector relative to a specimen surface can be realised by adjustment of the source and the dector or by orientation of the specimen. The solution chosen will usually depend on the nature and the dimensions of the specimen. This also holds, for example for translation of the specimen relative to a source/detector plane, i.e. displacement of the x-y plane in a z-direction extending transversely thereof. For customary analysis specimens it will usually be advantageous to realise this motion by specimen translation. For analysis performed on, for example finished constructions, for example for stress measurements carried out so as to detect metal fatigue and the like, or for the measurement of, for example crystal orientations in a specimen, it may be advantageous to grant the source and the detector a freedom of movement in the z-direction.

In a preferred embodiment in accordance with the invention, a divergence slit having independently adjustable, X-ray-shielding boundaries is provided between the X-ray source and a specimen space. As a result, a symmetrical or, if desirable, asymmetrical illumination of a specimen can be realised and it is also comparatively simple to irradiate only a desired area of the specimen. The adjustment of such a diaphragm can also be realised in encoded form and can be recorded in encoded form for correlation with analysis signals recorded by the apparatus.

In a further preferred embodiment, a Soller slit system comprising direction-adjustable Soller plates is arranged preferably near a surface to be irradiated of a specimen to be examined. Because of the high degree of freedom in respect of positioning of the source and the detector, it is less attractive to utilize a Soller slit system comprising a fixed Soller slit associated with the source and the detector, for example as used in an apparatus as described in the cited US 2,853,618. A Soller slit system may comprise laminations which are mounted so as to be rotatable about a common axis directed parallel to the plane of the laminations and the specimen plane or each lamination may be rotatable about a individual axis. Directional adjustment can also be realised, for example by displacements within the Soller slit system in a direction transversely of the lamination planes, possibly in combination with a change of lamination spacings. Furthermore, a displaceable and/or tiltable system of laminations can be used. The spacing between laminations is then varied in a direction transversely of the radiation transmission direction of the collimator. In a further embodiment the length of the laminations increases as measured in a direction perpendicular to the main direction of radiation to be collimated such that the collimating action improves in said direction. The Soller slit system will preferably be adjusted in encoded form by the central control unit.

Notably because of the high degree of freedom in respect of the relative positioning of the optical elements of an X-ray analysis apparatus of the described kind, it is desirable that the position of these elements is always exactly known. Mechanical adjustment thereof usually cannot be performed with adequate accuracy during measurements. In accordance with the invention, deviations as regards the exact relative positioning can be corrected on-line by means of the correction signals.

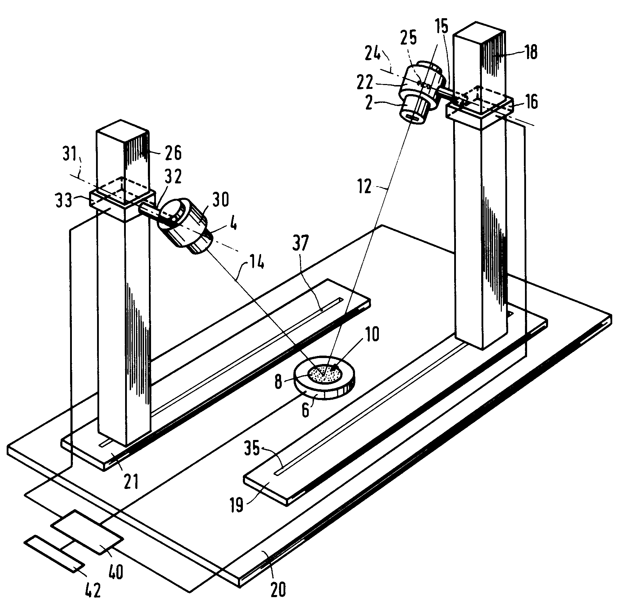

Some preferred embodiments in accordance with the invention will be described in detail hereinafter with reference to the drawing. The sole Figure of the drawing shows diagrammatically an X-ray analysis apparatus comprising a X-ray source 2, an X-ray detector 4, a specimen holder 6 with a specimen 8, a surface 10 of which is irradiated by an X-ray beam 12 emitted by the X-ray source. A beam 14 diffracted on the specimen is detected by the X-ray detector 4. *Via* an arm 15 and a base 16, the X-ray source is mounted on a column 18 which bears on a guide 19 mounted on a base plate 20. The base 16 is translatable along the column 18. An X-ray tube holder 22 is rotatable about an axis 24 extending transversely of the column 18 and preferably transversely of the guides 19 and 21. A radiation focus 25 of the X-ray source has an elongate shape in the present embodiment, its longitudinal direction being coincident with the axis 24; however, a point focus can alternatively be used. The X-ray detector 4 is mounted in a holder 30 which is connected, *via* a rotatable arm 32, to a base 33 which is translatably coupled to a column 26. An axis of rotation 31 of the rotatable arm 32 extends transversely of the guides 19 and 21. Translation and rotary adjustments of the X-ray source, the detector and the specimen holder are controlled and recorded by a central control unit 40. A signal storage device 42 for the storage of position and orientation data of said components and notably for the storage of signals required for beam path simulation control is coupled to the control device 40. Such a storage device is preferably also suitable for the storage of externally presented data. Adjusting mechanisms (not shown) for translation of the columns 18 and 26 along guide rulers 35 and 37 may also include encoders so that they can also be adjusted by the central control device 40 so as to be exactly positioned relative to an object to be measured.

If the specimen holder 6 is also suitable for a z-motion of the specimen, the detector 4 comprises a further rotation mechanism in order to allow the detector to remain aimed at the specimen in all circumstances. The same holds for the source particularly if use is made of a source having a point focus.

**Claims**

1. A radiation analysis apparatus, comprising a radiation source and a radiation detector for detecting radiation emanating from a specimen to be examined, characterized in that the apparatus comprises a device for generating and processing radiation-optical information in order to generate correction signals for correcting deviations in the apparatus.

2. A radiation analysis apparatus as claimed in Claim 1, characterized in that correction signals are available on-line for processing of measuring signals recorded by the apparatus.

3. A radiation analysis apparatus as claimed in Claim 1 or 2, characterized in that radiation-optical data for calculating correction signals are obtained by beam path simulation.

4. A radiation analysis apparatus as claimed in any one of the Claims 1, 2 or 3, characterized in that it is adapted to measure line patterns, line patterns of a measured spectrum or diffraction pattern being individually correctable in respect of position and/or shape by means of the correction signals generated by the simulation.

5. A radiation analysis apparatus as claimed in Claim 4, characterized in that the radiation source is adapted to generate a radiation beam in the visible or near-visible spectral range in order to generate an absorption spectrum of a specimen.

6. A radiation analysis apparatus as claimed in Claim 4, characterized in that the radiation source is adapted to generate a particle beam for generating a diffraction pattern by diffraction in a specimen.

7. A radiation analysis apparatus as claimed in Claim 4, characterized in that the radiation source is adapted to generate an X-ray beam for generating a diffraction pattern by diffraction in a specimen.

8. A radiation analysis apparatus as claimed in Claim 7, characterized in that a radiation-optical system thereof is suitable for an X-ray diffractometer.

9. A radiation analysis apparatus as claimed in any one of the preceding Claims, characterized in that the radiation source and the detector are arranged so that they can be independently positioned and/or oriented with respect to a specimen under the control of and recorded by a central control device.

10. A radiation analysis apparatus as claimed in Claim 9, characterized in that for positioning and orientation radiation-optical elements comprise sensors which can be controlled by the central control device.

11. A Soller slit system characterized in that laminations thereof establish an adjustable or local variable collimating action.

12. A Soller slit system as claimed in Claim 11 characterized in that laminations thereof are mutually pivotable.

13. A Soller slit system as claimed in Claim 11 or 12 characterized in that the length of laminations thereof increases in a direction perpendicular to the main ray direction in order to establish an improved collimating action in said direction.